# EUROPEAN PATENT APPLICATION

(11) **EP 2 288 160 A2**
(43) Date of publication of application: **23.02.2011**
(21) Application number: 10185956.9
(22) Date of filing: 16.11.2006
(51) Int. Cl.: H04N 7/18

(54) **Apparatus and method for conducting remote video inspection from above**

(30) Priority: 16.11.2005 US 274316; 17.11.2005 US 280201; 17.11.2005 US 280202
(62) Divisional of application: 06804735.6
(71) Applicant: CT-Zoom Technologies Inc., Terrebonne, Québec J6Y 1J4 (CA)
(72) Inventor: Lortie, Alain, TERREBONNE QUEBEC J6Y1J4 (CA); Blier, Sébastien, MONTREAL QUEBEC H2M 2T5 (CA)
(74) Representative: Tetaz, Franck Claude Edouard

(57) **Abstract**

The present invention generally relates to an apparatus for conducting remote subsurface inspections from above, comprising:
a support structure adapted to be positioned above a working surface, said support structure having an articulating radial arm, said articulating radial arm having a pivot at one end and a coupling at the other end, said pivot having a rotation axis substantially normal to said working surface;
a mast held by said coupling and born generally upright in use by said support structure, said mast having a portion that is downwardly extendable below the working surface and that has a mounting thereon;
an imaging system held by said mounting on said extending portion of said mast;
said apparatus being **characterized in that** it further comprises an offsetting mechanism operative to displace said imaging system laterally from a vertical reference axis beneath said coupling when said extending portion of said mast has been extended below the working surface.

## Description

### FIELD OF THE INVENTION

The present invention generally relates to the remote inspection of areas that are difficult to reach. More specifically, the invention relates to inspection of underground sewers, railroad bridge support structures and other facilities that may be examined remotely from a location above, using a video camera or other imaging system.

### BACKGROUND OF THE INVENTION

It is sometimes necessary to inspect certain areas that are inconvenient and/or time-consuming to access. For illustrative purposes, the inspection of storm and sewer pipes will be described, although the scope of the present invention is by no means limited to this application. Most municipalities contain a vast network of storm and sewer pipes. Periodically, these pipes must be inspected for problems such as cracks, blockage, build-up, and root infiltration. If a problem is detected, detailed images must be obtained to facilitate planning to remedy the situation. To this end, it is common for an invasive device such as a pipe crawler or push camera to be introduced into the pipe to perform the inspection and, at the same time, to obtain details of any problem encountered.

Although effective in obtaining detailed images, using a pipe crawler is inconvenient and requires a great deal of time to set up and operate, even if no problems are discovered. Setting up a pipe crawler involves first interrupting the water flow ahead of the pipes to be inspected and diverting it with a pump system, then cleaning all the pipes and finally introducing the pipe crawler in the pipe, which in itself requires the entering of a man through a manhole. In other words, much work is needed to obtain detailed information regardless of whether a problem exists.

Other methods for routine inspection involve using a camera with a powerful zoom fitted to the lower end of a mast. The camera and mast are lowered into a manhole until the camera reaches one of the sewer pipes. There, the camera is made to zoom in and out to obtain images of the interior of the pipe. Suspending the camera and mast by hand requires much manipulation and becomes rapidly tiring. Mounting the camera and mast to a vehicle is far more convenient. The operator can drive up to the area to be inspected, position his vehicle over a manhole, lower the camera into the manhole until it reaches the pipe to be inspected, and start collecting data.

Known vehicle mounted inspection cameras have a major drawback however. Since the camera and mast are lowered vertically from the vehicle, they are not capable of adequately reaching lateral sewer pipes that are offset from the manhole. Although most manholes are positioned squarely above the lateral conduits that they access, some manholes are substantially offset, generally because of an obstacle being in the way. In many municipalities, approximately 10 % of the underground piping network does not receive proper routine inspection with known equipment because the pipes are offset from the manholes that access them.

Conventional sewer inspection methods are globally the same as they were decades ago. According to these conventional inspection methods, a target pipe must be cleaned before a camera is winched through to pinpoint problem areas. As a result, related inspection costs become tremendous due to costs of pumping and diverting water flow before the inspection (can double the costs of inspection of a small-diameter pipe and more than quintuple it in the case of larger sewer mains). Why would sewer pipes need to be cleaned for the sole purpose of being able to winch a camera through them? Experience has shown that, in over 70% of cases, pipes do not need to be cleaned. In fact, mainly because of budgetary reasons, traditional methods are limited to inspect relatively small sections of sewer systems. Moreover, by flushing pipes out before inspection, vital information that could actually help to pinpoint the problem could be destroyed. Such information comprises evidence of leakage, deposits, root infiltration and inadequate water level.

On another side, imaging systems used for inspection of underground conduits should be specially accommodated to operate efficiently in gloomy, humid and difficult to reach areas in order to be able to provide quality of imaging in a cost effective and a non time-consuming way. Traditional imaging systems for inspection of underground conduits lack efficiency because they are not suitably accommodated for such inconvenient areas.

Therefore, there is a need for a routine inspection system that is both convenient for the operator, cost effective, and that allows reaching substantially all conduits radiating from a manhole, including those that are offset.

### SUMMARY OF THE INVENTION

It is therefore an object of the present invention to provide apparatus and methods for remote inspection of a structure using a special imaging system that overcome the above drawbacks.

In accordance with a broad aspect of the present invention, there is provided an apparatus for conducting remote subsurface inspection from above. The apparatus comprises a support structure, a mast, an imaging system and an offsetting mechanism. The support structure has an articulating radial arm and is adapted to be positioned above a working surface. The articulated radial arm has a pivot at one end and and a coupling at the other end. The pivot has a rotation axis substantially normal to the working surface. Preferably, the support structure further comprises a retractable ground contacting leg to aid in stabilizing the mast when the apparatus is in use. The mast is held by the coupling and is born generally upright in use by the support structure. The mast has a portion that is downwardly extendable below the working surface and has a mounting on that extending portion to hold an imaging system. An actuating mechanism is preferably used to extend and retract the extending portion of the mast. More preferably, the mast comprises telescoping cylindrical sections. Advantageously, the imaging system comprises a video camera having a zoom lens of at least 20 times magnification. The imaging system preferably further comprises at least one light. More preferably, a plurality of lights is arranged around the video camera. The offsetting mechanism is operative to displace the imaging system laterally from a vertical reference axis beneath the coupling when the extending portion of the mast has been extended below the working surface.

The coupling preferably comprises a mast pivot having a mast rotation axis substantially perpendicular to the extension axis of the mast. The mast is maneuverable to allow its rotation with respect to the support structure around the mast rotation axis.

Optionally, the mounting comprises an adjustable interconnection between the imaging system and the extending portion of the mast. The interconnection is remotely maneuverable from a first position in which the imaging system is proximal to the extending portion of the mast, to a second position in which the imaging system is displaced from the extending portion of the mast.

Preferably, the articulating radial arm comprises a plurality of sections joined by swivels. More preferably, the swivels and the mast pivot have locking mechanism to prevent their free rotation. Even more preferably, the support structure comprises an adaptor section adapted to fit to a hitch installed on a vehicle.

A display may optionally be provided to display images from the imaging system. Preferably, the display is mounted on a portion of the mast that is not downwardly extendable below the working surface.

In accordance with another broad aspect of the present invention, there is provided a method for conducting remote subsurface inspections from above. The method comprises the steps of (a) locating an access point on a working surface above a subsurface area, (b) positioning an apparatus for conducting remote subsurface inspections from above as disclosed here above proximal to the access point, (c) manipulating the mast of the apparatus in vertical alignment with the access point, (d) lowering the extending portion of the mast downwardly into such subsurface area until the imaging system of the apparatus is at the level to be inspected and (e) reviewing images of such subsurface area from the imaging system. Preferably, in step (d), the mast is lowered vertically, or substantially vertically, in the subsurface area.

Preferably, the method further comprises the step of displacing the imaging system laterally from a vertical reference axis beneath the coupling of the support structure of the apparatus when the extending portion of the mast has been extended below the working surface. More preferably, the coupling comprises a mast pivot, and the step of displacing the imaging system laterally comprises maneuvering the mast pivot to rotate the mast with respect to the support structure.

Optionally, the mounting of the extending portion of the mast comprises an adjustable interconnection between the imaging system and the extending portion of the mast. The step of displacing the imaging system laterally comprises remotely maneuvering the adjustable interconnection from a first position in which the imaging system is proximal to the extending portion of the mast, to a second position in which the imaging system is displaced from the extending portion of the mast.

In accordance with another broad aspect of the invention, there is provided an apparatus for conducting remote subsurface inspections from above which comprises a support structure, a mast and an imaging system. The support structure has an articulated radial arm and a coupling and is adapted to be positioned above a working surface. The articulated radial arm is connected to the coupling. The mast is held by the coupling and is born generally upright in use by the support structure. Preferably, the mast comprises telescoping cylindrical sections. The mast has an extending portion that is downwardly extendable below the working surface. The extending portion has a mounting thereon. The imaging system is held by the mounting on the extending portion of the mast. Preferably, the imaging system comprises a video camera.

The apparatus preferably comprises an offsetting mechanism that is operative to displace the imaging system laterally from a vertical reference axis beneath the coupling when the extending portion of the mast has been extended below the working surface. More preferably, the coupling comprises a mast pivot having a mast rotation axis that is substantially perpendicular to the extension axis of the mast. The mast pivot is maneuverable to allow rotation of the mast with respect to the support structure around the mast rotation axis.

Optionally, the mounting comprises an adjustable interconnection between the imaging system and the extending portion of the mast. The interconnection is remotely maneuverable from a first position in which the imaging system is proximal to the extending portion of the mast, to a second position in which the imaging system is displaced from the extending portion of the mast.

Preferably, the articulating radial arm comprises a plurality of sections joined by swivels. More preferably, the support structure further comprises a retractable ground contacting leg to aid in stabilizing the mast when the apparatus is in use. Even more preferably, the support structure comprises an adaptor section adapted to fit to a hitch installed on a vehicle.

In accordance with another broad aspect of the present invention, there is provided an apparatus for conducting remote subsurface inspections from above. The apparatus comprises a support structure, a mast and an imaging system. The support structure has a coupling and has a fitting to secure the apparatus to a hitch receiver installed on a vehicle. The support structure is positioned above a working surface. A mast is held by the coupling and is born by the support structure. The mast has an extending portion that is downwardly extendable below the working surface. Preferably, an actuating mechanism operative to extend and retract the extending portion of the mast is used. More preferably, the mast comprises telescoping cylindrical sections. The mast also has a mounting thereon. An imaging system is held by the mounting on the extending portion of the mast. Preferably, the imaging system comprises a video camera. More preferably, the imaging system further comprises a plurality of lights arranged around the video camera. Even more preferably, the video camera comprises a zoom lens of at least 20 times magnification.

Preferably, at least one hitch receiver is installed on a vehicle and the fitting comprises a bar adapted to be removably held within the hitch receiver such that the support structure is oriented to bear the mast generally upright in use. More preferably, the support structure further comprises an articulating radial arm connecting the mast thereto. Even more preferably, at least one hitch receiver is a standard trailer hitch receiver. Optionally, a plurality of hitch receivers is installed on a vehicle. Preferably, at least one of the hitch receivers is installed at the side of the vehicle.

The apparatus advantageously comprises an offsetting mechanism operative to displace the imaging system laterally from a vertical reference axis beneath the coupling when the extending portion of the mast has been extended below the working surface. The coupling preferably comprises a mast pivot having a mast rotation axis substantially perpendicular to the extension axis of the mast. The mast pivot is maneuverable to allow rotation of the mast with respect to the support member around the mast rotation axis. The mounting optionally comprises an adjustable interconnection between the imaging system and the extending portion of the mast, the interconnection being remotely maneuverable from a first position in which the imaging system is proximal to the extending portion of the mast, to a second position in which the imaging system is displaced from the extending portion of the mast.

Preferably, the articulating radial arm comprises a plurality of sections joined by swivels. More preferably, the swivels and the mast pivot have locking mechanism to prevent their free rotation. Even more preferably, the support structure further comprises a retractable ground contacting leg to aid in stabilizing the mast when the apparatus is in use. Optionally, the apparatus further comprises a display to display images from the imaging system. Advantageously, the display is mounted on a portion of the mast that is not downwardly extendable below the working surface.

In accordance with another broad aspect of the present invention, there is provided a method for conducting remote subsurface inspections from above. The method comprises the steps of (a) locating an access point on a working surface above a subsurface area, (b) positioning an apparatus for conducting remote subsurface inspections from above as disclosed here above proximal to the access point. The apparatus further comprises at least one hitch receiver installed on a vehicle, wherein the fitting comprises a bar adapted to be removably held within the hitch receiver such that the support structure is oriented to bear the mast generally upright in use. The support structure comprises an articulating radial arm connecting the mast thereto. The apparatus also comprises an offsetting mechanism operative to displace the imaging system laterally from a vertical reference axis beneath the coupling when the extending portion of the mast has been extended below the working surface. (c) manipulating the mast of the apparatus in vertical alignment with the access point, (d) lowering the extending portion of the mast downwardly into such subsurface area until the imaging system of the apparatus is at the level to be inspected and (e) reviewing images of such subsurface area from the imaging system.

The method optionally comprises the step of displacing the imaging system laterally from a vertical reference axis beneath the coupling of the support structure of the apparatus when the extending portion of the mast has been extended below the working surface. Preferably, the coupling comprises a mast pivot, and the step of displacing the imaging system laterally comprises maneuvering the mast pivot to rotate the mast with respect to the support structure. The mounting of the extending portion of the mast advantageously comprises an adjustable interconnection between the imaging system and the extending portion of the mast. The step of displacing the imaging system laterally comprises remotely maneuvering the adjustable interconnection from a first position in which the imaging system is proximal to the extending portion of the mast, to a second position in which the imaging system is displaced from the extending portion of the mast.

In accordance with another broad aspect of the present invention, there is provided a vehicle hitch mounting structure having a first and a second receivers. The first and second receivers comprise corresponding first and second longitudinal planes and first and second transversal planes. The first longitudinal plane is parallel to the second longitudinal plane and the first transversal plane is substantially perpendicular to the second transversal plane. Both first and second receivers are of the same type. Preferably, the hitch further includes a third receiver placed co-linearly with the second receiver. The third receiver faces a direction that is opposite to the direction faced by the second receiver. More preferably, first, second and third receivers are standard trailer hitch receivers. Even more preferably, the vehicle hitch mounting structure further comprises a vehicle body.

According to another broad aspect of the invention, there is provided an inspection system that comprises a mast, a support member to support the mast, a camera with a first interface unit to control attributes of the camera. The camera is mounted on the mast. The system also comprises a controllable high magnification ratio zoom with a zoom controller to control the high magnification ratio zoom. The zoom is mounted on the mast
electronically controllable light projectors with a second interface unit to control attributes of the light projectors, the light projectors being mounted on the mast; motors with a motor controller to mechanically control orientation of the camera, the zoom and the light projectors with respect to the mast; and a third interface unit located in proximity of the camera, the light projectors and the motors, the third interface unit having a single input signal and output signals connecting the third interface unit to each of the camera, the zoom controller, the light projectors and the motor controller.

According to another aspect of the invention, there is provided an inspection system comprising:
a mast;
a support member to support the mast;
a camera having an output video signal, the camera being mounted on the mast;
a server connected to the camera to store at least a part of the video signal outputted by the camera; and
a workstation connected to the server to control the video server to record the video signal and to transmit the recorded video signal to the workstation.

According to another aspect of the invention, there is provided a method of automatically generating attribute values defining controllable attribute values of an inspection imaging system, the method comprising steps of:
manually setting each of the attribute values to put the inspection system in an initial state;
selecting a navigation template among stored navigation templates, where the navigation template contains at least one set of the attribute values defining controllable attribute values of an inspection imaging system;
executing the navigation template during inspection of the inspecting object to generate the at least one set of the attribute values, the attribute values including camera orientation, camera zoom and lighting intensity; and
sending the at least one set of the attribute values to the inspection imaging system to automatically navigate according to the selected navigation template.

According to another aspect of the invention, there is provided a system for automatically generating attribute values defining controllable attribute values of an inspection imaging system, the system comprising:
a user interface unit receiving user friendly data commands from an end user to define the controllable attribute values;
a motor control module connected to the user interface unit to acquire a first user friendly data command and outputting a first attribute signal to control position and
orientation of the inspection imaging system;
a zoom module connected to the user interface unit to acquire a second user friendly data command and outputting a second attribute signal to control a high magnification ratio zoom of a camera of the inspection imaging system;
a camera module connected to the user interface unit to acquire a third user friendly data command and outputting a third attribute signal to control attributes of the camera;
a light projector module connected to the user interface unit to acquire a fourth user friendly data command and outputting a fourth attribute signal to control attributes of electronically controllable light projectors of the inspection imaging system; and
an interface unit receiving the attribute signals and outputting corresponding imaging system control signals;
a storage unit storing navigation templates, where each of the navigation templates contains at least one set of the attribute values defining the controllable attribute values of the inspection imaging system;
a select module connected to the storage unit to select a navigation template among the navigation templates in the storage unit; and
an execute module connected to the select module to execute the desired navigation template and to output the desired navigation template to the imaging system via the interface unit.

According to further aspect of the invention, there is provided a method of creating an identification header using a database to automatically extract information in connection with an inspecting object, the method comprising steps of:
navigating an inspection imaging system mounted on a mast supported by a support member to inspect the inspecting object;
recording the inspection to create an inspection video in connection with the inspecting object;
selecting the inspecting object in a database containing information about the inspecting object;
extracting, from the database, the information about the inspecting object;
using the extracted information for automatically editing a text identification header in connection with the inspecting object; and
merging the text identification header with the inspection video in connection with the inspection object.

According to further aspect of the invention, there is provided a system for creating an identification header using a database to automatically extract information in connection with an inspecting object, the system comprising:
An inspection imaging system mounted on a mast supported by a support member to inspect the inspecting object;
a storage unit containing information about a given group of inspecting objects;
a select module connected to the storage unit to select the inspecting object among the given group of inspecting objects in the storage unit;
a header edit module connected to the select module to edit an identification header in connection with the inspecting object; and
a video merge module connected to the header edit module to merge the edited identification header with an inspection video in connection with the inspecting object.

According to further aspect of the invention, there is provided an inspection imaging system mounted on a mast supported by a support member, the imaging system comprising:
a camera with an electronically controllable high magnification ratio zoom to perform inspections both from close up and from a distance;
at least five light projectors to provide necessary lighting in the underground conduit; and
a housing containing the camera and the light projectors, the camera being centered in the housing and the light projectors surrounding the camera.

According to further aspect of the invention, there is provided a method of inspecting an inspection object, the method comprising steps of:
determining appropriate optical composition of light to project as a function of an imaging environment;
selecting appropriate optical filters as a function of the appropriate optical composition of light to project;
placing the selected optical filters in front of light projectors of the inspection system, such that light projected by the light projectors on the inspection object is filtered by effect of the placed optical filters;
acquiring an image of the inspection object; and
analyzing the acquired image as a function of the optical composition of the projected light.

In the inspection system comprising light projectors, it is preferable that it comprises a power supply converter located in proximity of the light projectors, the power supply converter receiving a 48 volts current via a 48 volts cable connected to a remote power supply unit and converting the 48 volts to a 12 volts current in order to supply the light projectors.

In the inspection system comprising a camera with an output video signal connected to a server, the camera can be an analog camera having a controllable zoom, controllable orientation and controllable lighting for illuminating and imaging the conduit. In this case, the output video signal is an output analog video signal. The server can be part of a field relay unit providing power to the camera, the lighting and positioning motors, the field relay unit being connected to the camera to provide control signals and receive the output analog video signal from the camera and to the workstation via a data bus. It is preferable that the server comprises:
a CODEC device receiving the output analog video signal and converting the output analog video signal into a digital video signal and compressing the digital video signal for storage; and
a monitor image generator for sending a live monitor image from the camera to the workstation over the data bus.

The inspection systems of the present invention preferably comprise motors mounted on the mast to mechanically control orientation of the camera with respect to the mast.

In the method of automatically generating attribute values, it is preferable that the at least one set of the attribute values comprises a sequence in time of a group of sets of the attribute values. In addition, the navigation template can represent a marked state of attributes and the step of sending the at least one set of attribute values can comprise sending one set of attribute values defined by the marked state. Besides, the step of selecting a navigation template preferably comprises selecting the navigation template as a function of a type of the inspecting object.

The system for automatically generating attribute values preferably comprises a state save module connected to the storage unit for storing, as a navigation template, the attribute signals corresponding to a current state.

In the imaging system, the housing has preferably a common faceplate for both the camera and the light projectors. The housing has preferably a hexagonal shape and preferably comprises cooling fins and at least one thermoelectric cooling device to dissipate heat generated by the light projectors. In addition, the housing preferably comprises apertures of standard dimensions that can receive standard 58 millimeter lens filters and inside of which the light projectors are located, such that light projected by the light projectors is filtered by effect of the standard lens filters. Besides, the imaging system preferably comprises a mast to support components of the imaging system and motors to mechanically control orientation of the imaging system with respect to the mast.

In the method of inspecting an inspection object using optical filters, the imaging environment can be a wall of an underground conduit and, in this case, the selection of appropriate optical filters is carried out as a function of at least one of humidity inside the underground conduit and material of the wall such that the acquired image shows defects of the wall. The imaging environment can also be an underground conduit filled with liquid and, in this case, the selection of appropriate optical filters is carried out as a function of at least one of humidity inside the underground conduit and reflection properties of the liquid such that said acquired image shows the underground conduit without light projected by the liquid.

Advantageously, the present invention provides a convenient inspection system, which may be mounted on a hitch of a vehicle for conducting remote subsurface inspections from above as previously described. The present invention also provides fast and cost-effective systems and methods to produce comprehensive and detailed assessments of given sections of sewer systems. The present new technique produces impeccable detailed documentation to support budgetary requests and master plans. Therefore, it is possible to establish immediate inspection and cleaning priorities while obtaining a "big-picture" view of what needs to be done in the long term.

### BRIEF DESCRIPTION OF DRAWINGS

These and other features of the present invention will become more apparent from the following description in which reference is made to the appended drawings wherein:

Figure 1 shows a cross-sectional side view of prior art inspection assembly reaching an underground conduit.

Figure 2 shows a cross-sectional side view of prior art inspection assembly trying to reach an offset underground conduit.

Figure 3 shows a cross sectional front view of an embodiment of the present invention reaching an offset underground conduit.

Figure 4 shows a perspective view of an embodiment of the present invention.

Figure 5 shows a perspective view of another embodiment of the present invention in action.

Figure 6 shows a perspective view of a further embodiment of the present invention.

Figure 7 shows a partial cross-section perspective view of an embodiment of the invention in use.

Figure 8 shows an exploded perspective view of a vehicle having a hitch as per another embodiment of the invention.

Figure 9 is a block diagram of an imaging system according to a preferred embodiment of the invention;

Figure 10 is a block diagram of an imaging system according to another preferred embodiment of the invention;

Figure 11 is a flow chart of a method of marking a state of controllable attributes of components of an imaging system according to a preferred embodiment of the invention;

Figure 12 is a block diagram of a system for marking a state of controllable attributes of components of an imaging system and using the marking state to edit and use a navigation template according to a preferred embodiment of the invention;

Figure 13 is a flow chart of a method of inspection of an underground conduit using a navigation template according to a preferred embodiment of the invention;

Figure 14 is a flow chart of a method of creating an identification header using a database to automatically extract information in connection with an inspected underground conduit according to a preferred embodiment of the invention;

Figure 15 is a block diagram of a system for creating an identification header using a database to automatically extract information in connection with an inspected underground conduit according to a preferred embodiment of the invention;

Figure 16 is a flow chart of a method of inspecting an inspection object using optical filters.

### DETAILED DESCRIPTION OF THE INVENTION

The imaging system used in the present invention is not a regular imaging system that can be hold over a shoulder but is a special imaging system mounted on a mast supported by a support member that is usually fixed to an inspection truck. For illustrative purposes, the inspection of underground conduits will be described, although the scope of the present invention in by no means limited to this application. In fact, the invention relates to the remote inspection of structures that may be examined remotely using an imaging system, such as underground conduits and railroad bridge support structures.

In the text, when it is referred to "imaging system", it should be understood that it is referred to the part of the inspection system that is placed inside the inspecting underground conduit for imaging. The "imaging system" does not include components that do not constitute a part of the system placed inside the conduit for inspection. However, when it is referred to "inspection system", it should be understood that it is referred to the whole system used for inspection. This comprises the imaging system as well as other components used directly or indirectly in connection with the "imaging system".

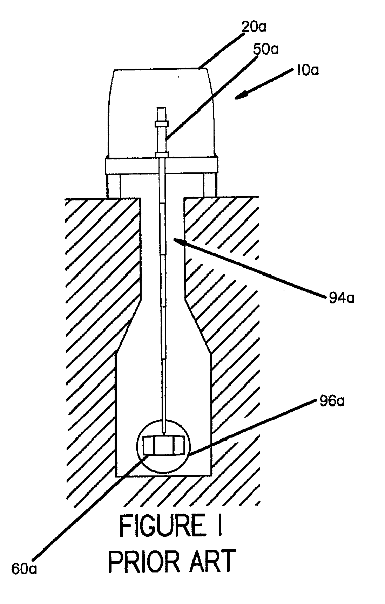

Figure 1 depicts an example of prior art. In this example, an inspection system 10a is mounted to a vehicle 20a having a telescoping mast 50a deployed through a manhole 94a such that a video imaging system 60a is able to reach the lateral conduit 96a.

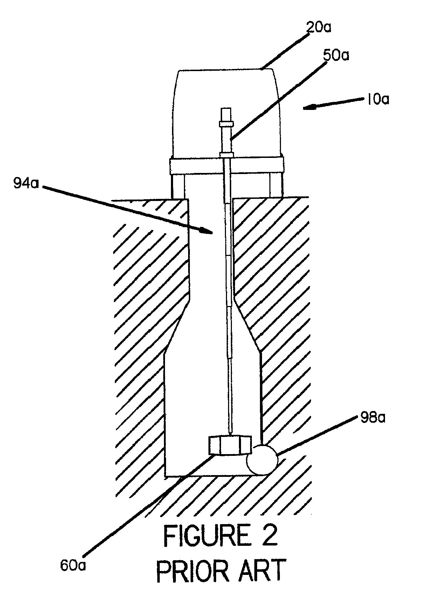

Figure 2 depicts the same example of prior art inspection system as in Figure 1 trying to reach an offset lateral conduit 98a this time. It is apparent that even by positioning the vehicle 20a as close as possible to the side of the manhole 94a, it is not possible for the imaging system 60a to reach the center of the offset lateral conduit 98a.

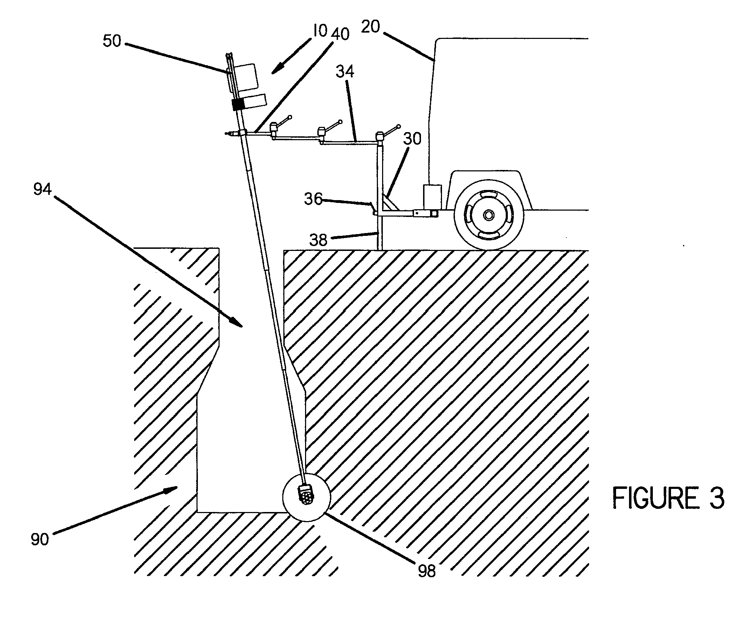

Figure 3 shows an embodiment of the present invention reaching a similarly offset lateral conduit 98 as the offset lateral conduit 98a depicted in the prior art system of Figure 2. It is possible to see that by using the features of the present invention, it is now possible for the video imaging system 60 to reach an offset lateral conduit 98, even when not locating vehicle 20 precisely over the area to be inspected 90.

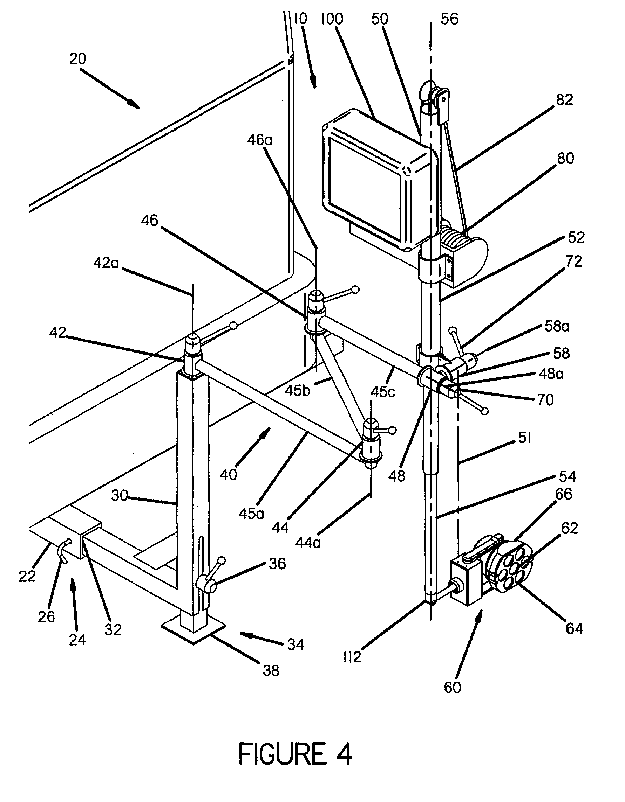

As best seen in Figure 4, the inspection system 10 is installed on a vehicle 20. In the present case, the adaptor section 32 of support structure 30 is inserted in the receiver 22 of the hitch 24. A locking pin 26 is used to hold the inspection system solidly connected to the hitch. Furthermore, a device using a set-screw (not shown) to press the support structure 30 against the receiver 22 may be used to remove any play in the assembly. To provide stability to the inspection system 10 such that the images sent by the video imaging system 60 are of good quality, a stabilizing mechanism 34 is used. When not in use, a leg 38 of the stabilizing mechanism 34 is retracted within the support structure 30. When in use, the leg 38 is lowered until it contacts the ground. Whether in the up or the down position, the leg 38 needs to be locked in place using the locking mechanism 36. In this embodiment of the invention, the inspection system 10 is depicted having an articulating radial arm 40 and a first, second and third pivots 42, 44, 46 having their respective first, second and third rotation axis 42a, 44a and 46a.

In the embodiment of the present invention shown in Figure 4, the articulating radial arm 40 is interrupted at two places by a second pivot 44 and third pivot 46, defining three arm sections 45a, 45b, 45c. When the inspection system 10 is installed at the back of a road vehicle 20, the articulating radial arm 40, when folded, does not extend beyond the sides of the vehicle 20.

The telescoping mast 50 comprises multiple sections: a fixed outer section 52 and internally nested extending sections 54. The outer section 52 is connected to the articulating radial arm 40. The purpose of the telescoping mast 50 is to lower the video imaging system 60 into the manhole 94 closely to the centerline of lateral conduit. Typically, the telescoping mast 50 will be capable of reaching at least 20 feet underground. Sometimes, however, the lateral conduit is so offset from the manhole 94 that it is not possible for the video imaging system 60 to reach an offset lateral conduit 98 sufficiently well for it to be within the field of view of the imaging system 60. Hence, the present invention uses an offsetting mechanism to offset the video imaging system 60 and thereby reach such an offset lateral conduits 98. Figure 4 shows an embodiment of such an offsetting mechanism in the form of a mast pivot 58, connecting the outer section 52 to the articulating radial arm 40. Once the extending section 54 of the telescoping mast 50 has been extended underground, the mast pivot 58 allows the operator to tilt the telescoping mast 50 such that the video imaging system 60 is displaced from its original position, where it was more or less in line with a vertical reference axis 51 located beneath the mast pivot 58, to align with the offset lateral conduit 98. Hence, the video imaging system 60 has the inside of the offset lateral conduit 98 in its field of view and is capable capable of zooming in and out permitting the inspection to proceed. Once in position, the operator uses the locking mechanisms 70 to lock the telescoping mast 50 at the desired angle.

A winch 80, of which cable 82 is connected to the last extending section of the telescoping mast 50, operates its extension or retraction. When the winch 80 unwinds its cable 82, gravity pulls the video imaging system 60 and the extending sections 54 down. To pull the video imaging system 60 back up, the operator rewinds the cable 82. The winch 80 is preferably installed on the telescoping mast 50, but may be fixed to another part of the inspection system 10 that is convenient.

Although other materials may be used for the fabrication of the telescoping mast 50, the use of composite materials is preferred. Two major reasons justify this choice. Firstly, in many instances, inspections are performed in harsh environments with corrosive elements. Secondly, when the articulating radial arm 40 is deployed, the weight of telescoping mast 50 plus video imaging system 60 generates a considerable torque on the first pivot 42. Glass-fiber is a lightweight composite material meeting all design criteria while still keeping the cost reasonable.

A video imaging system 60 is installed at the lower extremity of the extending section 54 of the telescoping mast 50. The video imaging system 60 may be fixed in many ways to the extremity of extending section 54: it may be rigidly fixed, it may be rotatably fixed such as to provide rotation of the video imaging system 60 around the extending axis 56, or it may use an articulation 112 such as to provide any angular movement of the video imaging system 60 with respect to the extending axis 56. Installed in this manner, the video imaging system 60 is the lowest point of the inspection system 10 and can best reach the inside of underground conduits. The video imaging system 60 uses a camera 62 equipped with a relatively high magnification ratio to be capable to perform inspections both from close up and from a distance. Preferably, the camera uses a 26x optical zoom combined with a 12x numerical zoom. Furthermore, although the camera 62 is of a model tolerant to low-light conditions, the video imaging system 60 is equipped with an array of light projectors 64 to provide necessary lighting. The camera 62 and light projectors 64 are mounted in a lightweight housing having fins to dissipate heat generated by the light projectors 64. Preferably, the camera 62 is mounted near the center of the housing 66 with the array of light projectors 64 surrounding it. This design provides the advantage of minimizing shadows captured by camera 62. A further advantage is that this design is very compact. The housing 66 of the video imaging system 60 should be lightweight, resistant to corrosion and watertight. Aluminum is preferably used.

Images obtained by the camera 62 are relayed through wiring, or wirelessly, to the video equipment inside the vehicle for analysis. Alternatively, they could be recorded on a medium (CD, DVD, hard disk, etc) or sent remotely for analysis. Images obtained may be analyzed to determine whether problems such as cracks, blockage, and root infiltration exist. If no problem is detected, then the inspection system 10 may be moved quickly to another area to perform another inspection. On the other hand, if a problem is detected, a pipe crawler or other invasive type of inspection may be performed to obtain the details necessary to remedy the situation. This way, the time of setting up and operating a pipe crawler or similar device is not wasted on areas that are in acceptable condition.

A display 100 is mounted on the outer section 52 of the telescoping mast 50 to allow the operator to visualize where the video imaging system 60 is located. Images from the camera 62 are relayed to the display 100. The display 100 may alternatively be mounted on another part of the inspection system 10. For convenience, the display 100 is preferably mounted at eye level either on the telescoping mast 50 or on a section of the inspection system 10 close to it.

The inspection system 10 is installed on a vehicle 20 having a hitch 24. The adaptor section 32 of support structure 30 is inserted in the receiver 22 of the hitch 24. A locking pin 26 is used to hold the inspection system 10 solidly connected to the hitch 24. Preferably, a standard commercially available trailer hitch having a square cross section receiver is used. However, different models may be used, including non-standard ones, provided that the adaptor section 32 matches the receiver 22. The fact that the inspection system 10 may be adapted to fit a hitch 24 having a standard receiver provides many benefits. For example, the inspection system 10 may be easily installed on, or removed from, in a matter of minutes, various vehicles equipped with a standard hitch having the right receiver. This yields large cost savings, as the owner, often a municipality, does not have to invest in a fleet of special vehicles equipped with a dedicated inspection system 10. Furthermore, when the vehicle is not available (due to maintenance, repair or just plain too old to circulate), the inspection system 10 may be transferred to another vehicle equipped with a similar hitch, hence not jeopardizing the inspections to be conducted. Another advantage is that the considerable weight of a vehicle provides a stable platform for the inspection system 10. Images coming from the video imaging system 60 are therefore of higher quality, in particular when the camera 62 zooms in. This is especially true when the present invention is compared with the handheld inspection systems of prior art. The installation of the inspection system in the receiver of the hitch is performed in the conventional manner, such that it is not necessary to be described here.

The articulating radial arm 40 and first pivot 42 allow the lateral displacement of telescoping mast 50 and video imaging system 60. Indeed, the operator no longer has to move his vehicle as close to the area to be inspected 90. This feature is extremely useful when the area to be inspected 90 is, for instance, displaced away from the road. The operator may just park his vehicle 20 by the side of the road and extend the articulating radial arm 40 until the telescoping mast 50 is located above the manhole 94. Furthermore, the more arm sections the articulating radial arm 40 has, the more easily the telescoping mast 50 may be deployed around obstacles and the farther from the vehicle 20 it can reach. On the other hand, more pivots add weight, play in the articulating radial arm 40, and cost to the inspection system 10. Hence, the number of arm sections of the articulating radial arm 40 is dictated by these practical considerations. It has been found that an articulating radial arm 40 split in two or three arm sections provides an optimum solution in most cases. In the specific example of Figure 4, the second rotation axis 44a and third rotation axis 46a of second pivot 44 and third pivot 46 respectively are parallel and oriented vertically. These pivots do not necessarily have to be oriented parallel to each other or vertically. Each of them could well be oriented in any other way. However, it is considered to be preferable to orient them as described. The first arm section 45a of the articulating radial arm 40 is connected at one end to the support structure 30 through first pivot 42 and at the other end to the second arm section 45b of articulating radial arm 40 through second pivot 44. The third arm section 45c of articulating radial arm 40 is connected at one end to the other end of the second arm section 45b through third pivot 46 and at its other end to the telescoping mast 50 through both fourth pivot 48 and mast pivot 58. In this specific example, fourth pivot 48 is used to provide added maneuverability of the telescoping mast 50 by allowing both the telescoping mast 50 and its mast pivot 58 to rotate around the fourth rotation axis 48a. The rotation axis of pivot 48 is preferably oriented coaxially with the third arm section 45c of the articulating radial arm 40 and perpendicularly to the mast pivot 58. The mast rotation axis 58a of mast pivot 58 is preferably oriented horizontally. Although the operator appreciates the added flexibility provided by the use of fourth pivot 48, the use of this element is not necessary to perform the invention, as it is possible to do without fourth pivot 48.

To simplify the manufacturing process, it is preferable to use the same pivot construction everywhere. Pivots, such as first pivot 42, may use different types of elements to provide rotation: ball bearings, taper bearings and bushings, to name a few. Since the construction of pivots is well know in the art, it will not be covered in further detail here. One or many locking mechanisms 70 may be use to prevent the pivots from rotating. Preferably, a locking mechanism 70 is used at each pivot location to prevent it from rotating both when the inspection system 10 is stored or when the video imaging system 60 is in use. In the latter case, it is important to provide a stable platform for the video imaging system 60, especially when the camera 62 zooms in with its powerful zoom. Each locking mechanism 70 is provided with a handle 72 such that they are easily operated by the operator.

The articulating radial arm 40 may fold on itself, allowing for a very compact storage position. In the present configuration, all arm sections 45 a, 45b, 45c of the articulating radial arm 40 fold on the same vertical plane, one section above each other. Once deployed, the articulating radial arm 40 becomes approximately as long as the sum its three arm sections 45,a, 45,b, 45c, providing added range to reach the area to be inspected 90.

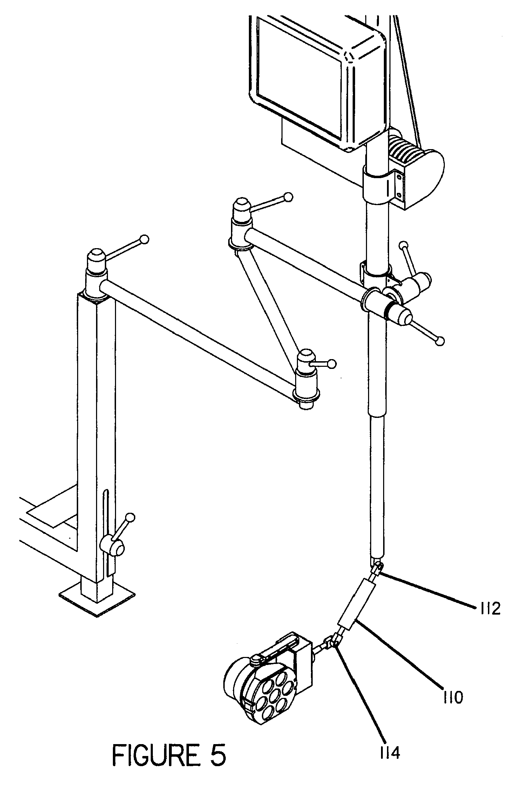

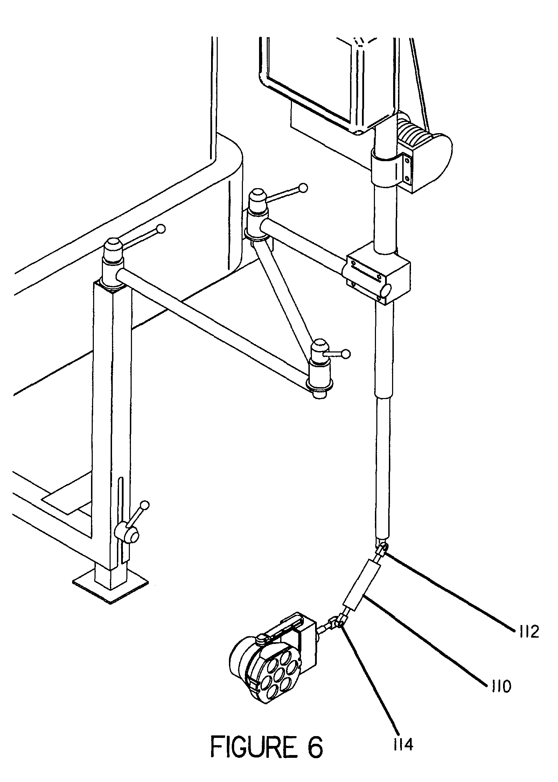

Figure 5 depicts an alternative embodiment of the invention that includes a second offsetting mechanism. Similar components are given like reference numbers and their description will not be repeated. The second offsetting mechanism of the inspection system 10 takes the form of a locating arm 110 pivotally connected at the tip of the extending section 54 of the telescoping mast 50. This locating arm 110 is provided with articulations 112 and 114 at each end such that it is possible to laterally offset the video imaging system 60 from the mast reference axis 51 such that the video imaging system 60 is located at the desired location for viewing the interior of the offset lateral conduit 98. Both offsetting mechanisms, namely, the mast pivot 58 and the locating arm 110 may be jointly present on the inspection system. This embodiment provides the maximum flexibility in being able to reach offset lateral conduits. Alternatively, for cost considerations for example, only one of the two offsetting mechanisms may be present on the inspection system 10. Figure 6 depicts an embodiment where only the locating arm 110 is present. Different offsetting mechanisms could also be used as an alternative to the locating arm 110. For instance, the video imaging system 60 could be mounted on a mechanism that slides perpendicularly to the mast extension axis 56, or a scissor type of mechanism could also be used to laterally project the video imaging system 60 in an offset lateral conduit 98. Many different dispositions and mechanisms to project the video imaging system 60 laterally from the extending mast 50 would be apparent to one skilled in the art, and are all intended to be covered by the present invention.

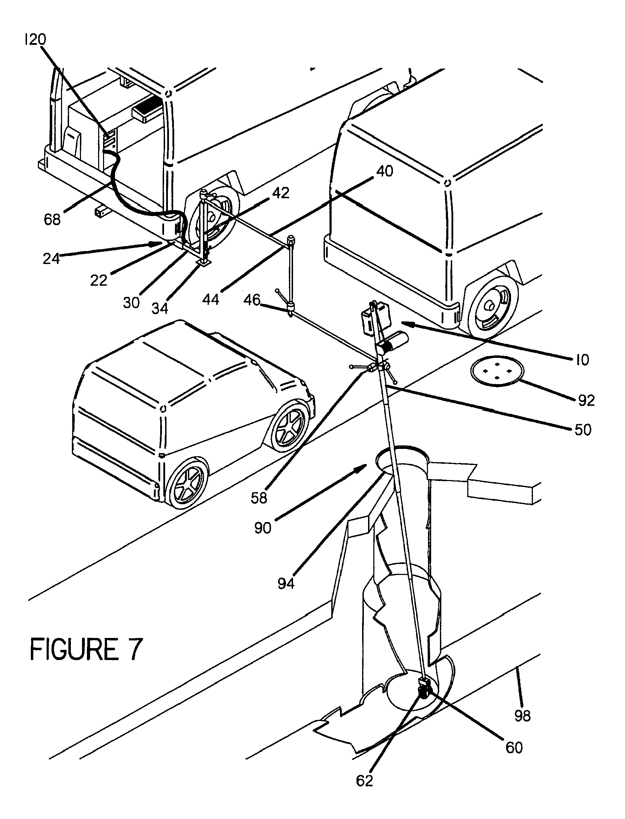

Figure 7 highlights the advantages of the invention in use. To work the invention, the operator drives to the area to be inspected 90 and parks his vehicle 20 nearby. If the inspection system 10 is not readily installed, the operator would install it in one of the receivers 22 of the hitches 24 on the vehicle 20. The operator then connects a power supply to the video imaging system 60, to the winch 80 and connects the wiring 68 between the camera 62 and the imaging processing equipment 120. The manhole cover 92 is removed to gain access to the manhole 94. He then lowers the video imaging system 60 in the manhole 94 using the winch 80. Monitoring the images sent back from the camera 62 to the display 100, the operator uses the winch 80, and all adjustments provided by the different pivots 42, 44, 46, 48 and 58 to adequately position the camera 62 at the center of the offset lateral conduit 98 to be inspected. Alternatively, the operator could adjust articulations 112 and 114 to adequately position locating arm 110 and video imaging system 60. If the lateral conduit 98 were not offset from the manhole 94, the operator may not have to use mast pivot 58. The camera 62 is then zoomed to obtain an image at the desired magnification. Once the inspection is finished, the video imaging system 60 is pulled back up, the articulating radial arm 40 is folded back into storage position and the manhole cover 92 put back in place. The operator may then drive to the next inspection area.

Optionally, for further convenience to the operator, or when it is better indicated for him to stay inside his vehicle, because of safety concerns for example, the inspection system 10 is remotely controllable. All moveable parts and joints of the system are motorized such that the operator may remotely manipulate the inspection system 10 from within his vehicle 20. The imaging system 60 continuously sends an image to the operator such that he sees where the camera 62 is going. To get a better view of the environment and where the telescoping mast 50 or the articulating radial arm 40 are continuously located, additional cameras may be added at various locations on the inspection system 10.

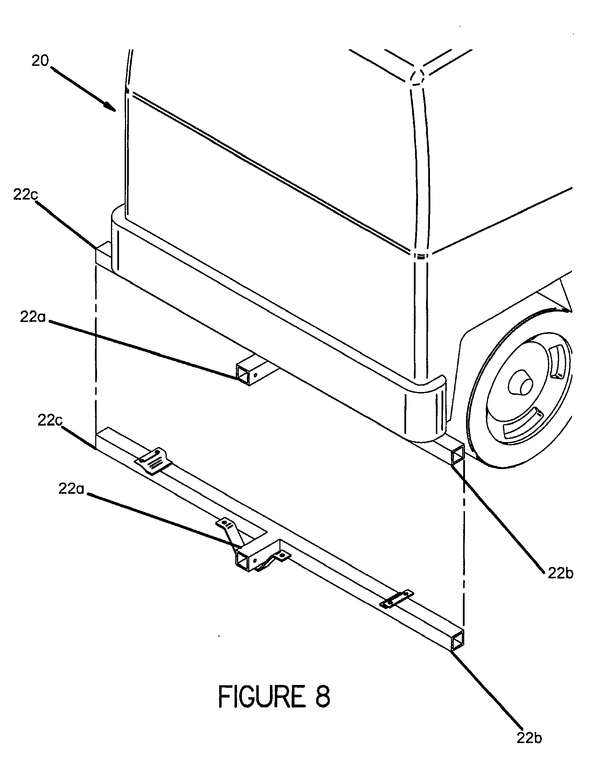

To further improve the reach of the inspection system, it is possible to use a specially designed hitch 24 as shown in Figure 8. Such a hitch has one receiver 22a facing towards the back and one facing towards each side of the vehicle, 22b and 22c, for a total of three receivers. This design is convenient as it allows the operator to install the inspection system 10 either at the back or at the left or the right of the vehicle 20. This proves to be useful when all manholes to be inspected are located on the same side of the street, or if the operator needs to reach farther away on one side of the vehicle. The hitch 24 shown in Figure 8 shows a receiver normally located towards the back of a vehicle and a square tube placed perpendicularly to the back receiver 22a, defining both lateral receivers 22b and 22c at each of its extremities. The inspection system 10 is connected in the same manner whether it is at the back or on the sides of the vehicle 20. Alternatively, the hitch may have more or less than three receivers and they may be placed at any position, any angle and any height with respect to one another.

The person skilled in the art will recognize that many variations could be made to the present invention. For instance, the inspection system 10 could be equipped with a non-standard adaptor section 32 and fit into a corresponding non-standard receiver 22. Furthermore, the inspection system 10 does not have to be installed on a hitch: indeed, it could be connected to a vehicle 20 either permanently, or through the use of fasteners. Also, the inspection system could be permanently installed on the back, or at the side, of a vehicle. The vehicle used with the invention is a land vehicle such as, without limitation, a car, a truck, a sport utility vehicle, an all-terrain vehicle, a trailer, or even a set of wheels, mounted or not on their own frame, fixed to the support structure 30.

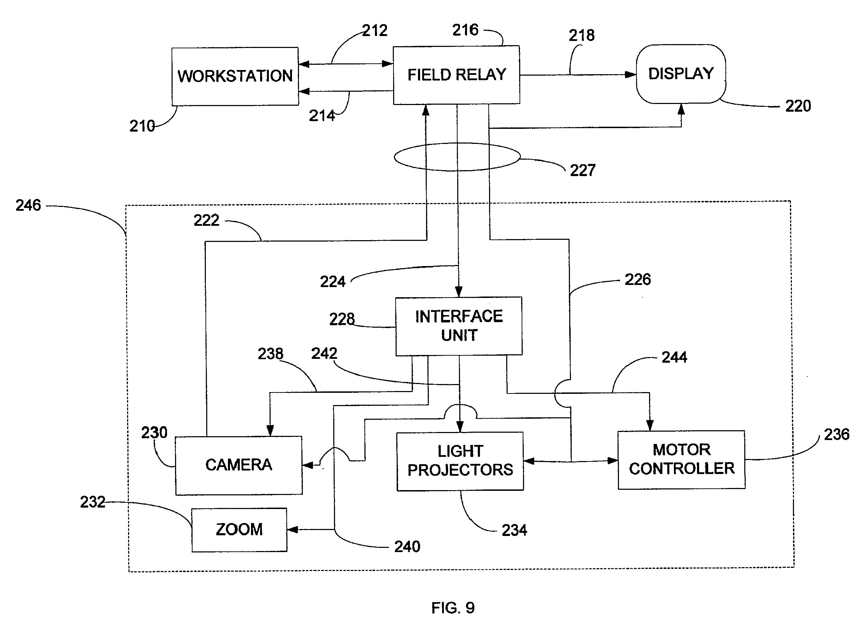

Another embodiment of the invention will now be described. Referring to Figure 9, there is shown an imaging system for inspection of an underground conduit 246 connected to a workstation 210 by the intermediary of a field relay 216 with a harness 227 located in the field in proximity of the workstation 210 and far from the imaging system 246. The imaging system 246 comprises a camera 230 with controllable attributes, a high magnification ratio zoom with a zoom controller 232, a motor with a motor controller 236 and light projectors 234. The camera 230 can be either a digital or an analog one, but the zoom is necessarily an optical one to be able to provide the required quality of image. It is always possible to have simultaneously a digital and an optical zoom. The light projectors 234 are preferably electronically controllable light projectors to be able to vary their intensity.

Preferably, the imaging system 246 comprises an interface unit 228 located in proximity of the camera 230, the zoom, the light projectors 234 and the motors. The harness 227 comprises a video cable 222 connected to the camera 230, an attribute cable 224 connected to the interface unit 228 and a power cable 226 connected to each of the camera 230, the light projectors 234 and the motor controller 236 of the imaging system 246.

Preferably, the imaging system 246 is controlled manually from the workstation 210 from which an operator sends a control signal via a USB connection 212 to control the camera 230, the camera zoom, the light projectors 234 and the motors. Following, the field relay 216 receives the control signal sent by the workstation 210 and, in consequence, transmits various attribute signals over a single attribute cable 224 to control the different components of the imaging system 246. The attribute signals include attribute values of the camera 230, attribute values of the zoom, attribute values of the light projectors 234 and attribute values of the motors.

The imaging system 246 is electrically supplied by the means of a power supply preferably located in the field relay 216. Accordingly, the field relay 216 comprises a 110 volts socket connected to each of the camera 230, the light projectors 236 and the motor controller 236 by a power cable 226. The same power cable 226 is also connected to supply the display 220 located in proximity of the field relay 216.

The field relay 216 comprises a video input for receiving, via a first video cable 222, a video signal recorded by the camera 230. It is possible for the field relay 216 to be connected to the workstation 210 by a second video cable 214 to convey the received video signal for storage in the workstation 210. When the received video signal is an analog signal, a CODEC device located in the workstation 210 receives the analog video signal, converts it into a digital video signal and then compresses the digital video signal for storage.

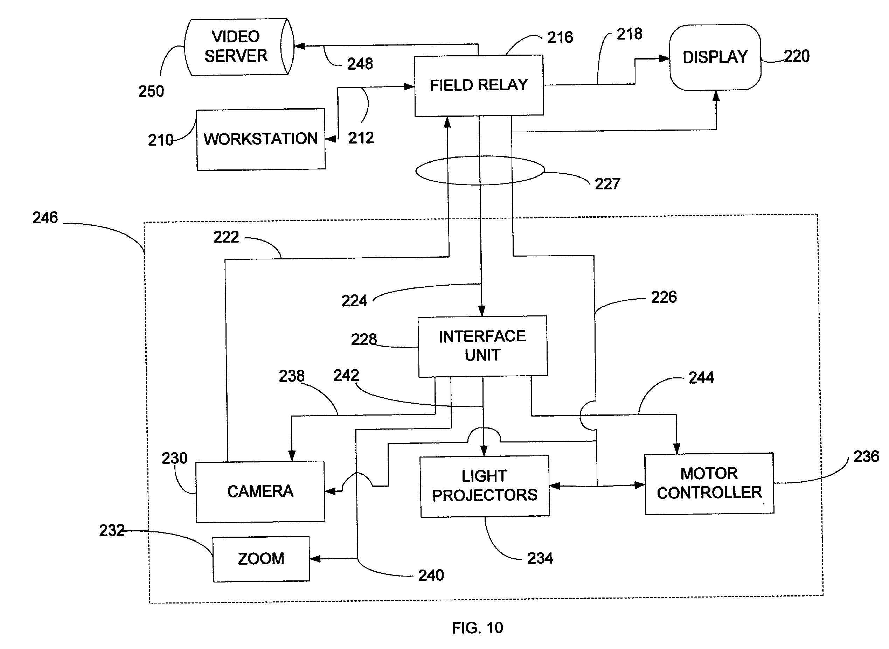

Even if it is possible to store the video signal in the workstation 210, it is preferable to have an independent server for this purpose. Accordingly, FIG. 10 shows a video server 250 connected to the field relay 216 by a fourth video cable 248. When the received video signal is analog, the video server 250 comprises a CODEC device to receive, convert and compress the received signal.

The importance to have a video server 250 independent of the workstation 210 is ordered by the fact that the vast majority of the existing trucks used for video inspections are either equipped with workstations having analogical mode equipments, such as a VHS video tape recorder, or with workstations having inappropriate characteristics for video image storage. The digitalization of video signals in real time requires a computer with a very specific architecture and data-processing components especially dedicated for this purpose.

It is preferable, in order to ensure fluidity of the image during viewings and recordings, that the server comprises several components with special characteristics, such as a video card with a video entry of a very good quality and a hard disk system of type Raid with a minimum speed of 7200 spins/s to store the video data. Furthermore, it is preferable to have a minimum of 512 MB of read-write memory and a motherboard equipped with at least a Pentium IV processor. A server with such characteristics is required to provide a good quality of image. It is also possible, after installation of especially dedicated software, to be connected to the server via a local or a remote connection (ex. USB, WIFI and Internet) in order to control recording and transferring of the video signal.

According to a preferred embodiment of the invention, the field relay 216 comprises a TV output from which the received video signal is conveyed to a display 220 via a third video cable 218. The display 220 can be an analog or a digital one according to if the received video signal is analog or digital. The display 220 is located in the field and displays the video signal recorded by the camera 230. The first utility of displaying the video signal is that it allows the operator to visualize, in real time, the video signal recorded by the camera 230, giving him the possibility to further control in consequence the attributes of the components of the imaging system 246 (*i.e*. zoom, light intensity, orientation of the camera, brightness of the image, etc.). Another utility of displaying the video signal is to allow an assistant operator in the field to position the imaging system appropriately in the middle of the inspecting underground conduit, the operator assistant being guided by the video image displayed. Without this innovation, it is practically impossible to carry out this operation efficiently due to the deepness of underground conduits. Another utility is that he operator can also control which part of the recorded video signal to store.

The interface unit 228 of the imaging system 246 is responsible of all the intelligence of the imaging system 246. Even if it can also be located in the field relay 216, the interface unit 228 is preferably located in the imaging system 246. The interface unit 228 is provided with a microcontroller preferably containing special software using the standard protocol of communication MODBUS that allows receiving and converting signals (*i.e*. VISCA or other types of signals) via a single input interface and corresponding each of these received signal to its appropriate output interface, among a group of output interfaces. In the event, the interface unit 228 receives the attribute signals over the attribute cable 224 and conveys the received attribute signals to their respective output interfaces so that they can be forwarded toward their respective destinations (*i.e*. camera 230, zoom, light projectors 234 and motors) by the means of various cables. Accordingly, the interface unit 228 transmits the camera attribute values to the camera 230 via a first attribute cable 238, the zoom attribute values to the zoom controller 232 via a second attribute cable 240, the light attribute values to the light projectors 234 via a third attribute cable 242 and the motor attribute values to the motor controller 236 via a fourth attribute cable 244.

In this approach, one of the advantages to locate the interface unit 228 in the imaging system 246 (and not in the field relay 216) is to decrease the size of the harness 227 between the field relay 216 and the imaging system 246, making it more flexible and easy to work.

The light projectors 234 are preferably electronically controllable light projectors comprising a group of projectors surrounding the camera 230. The projectors can be either bulbs or leds. Given the big number of projectors and in order to further decrease the size of the harness 227, it is preferable to supply the light projectors 234 from a power supply source with a converter located in their proximity. With this intention, instead of supplying the light projectors 234 from the field relay 216 with 12 volts current, it is possible to supply it with 48 volts current (that requires a thinner cable) and to convert it to 12 volts current with a 48 to 12 volts converter located in the imaging system 246.

In the course of inspection, many reasons justify the need to memorize, at a given instant, the state of attributes of the components of the imaging system. Considering the loss of time and the lack of accuracy in adjusting manually the attributes, the system allows memorizing a state of attributes at any instant during inspection, doesn't matter if the system is in an automatic or a manual mode, changing the state of attributes and then setting up the system automatically according to the memorized state of attributes. To do so, the motors are equipped with special sensors capable of detecting orientation and position of the imaging system in space. Thereafter, the system memorizes the detected orientation and position of the imaging system. From their side, the attributes of the light projectors, of the zoom and of the camera are continuously monitored, such that when the mark state command is triggered, the system reads and memorizes the last state of attributes of the components of the imaging system.

For instance, one among the utilities of marking a state is when the imaging system is in an automatic mode and the operator wants to temporally interrupt the automatic mode (for instance, to inspect manually a given zone in the field of view of the camera) and then goes back to it without loosing the state of attributes of the components right before the interruption. By marking the state of the attributes before interrupting the automatic mode of the imaging system, the operator will be able to put the system in a manual mode, change the state of the attributes according to the needs (ex. change the zoom, the intensity of the projectors, the orientation of the camera, etc.) and then set up the system with the same state of attributes as right before the interruption.

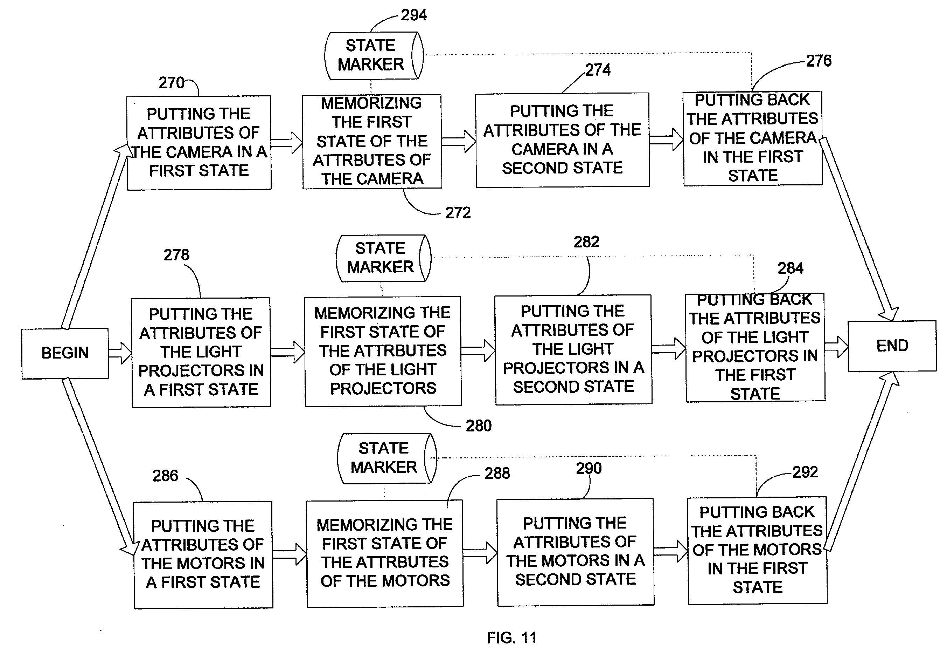

Referring to FIG. 11, there is shown a method of marking a state of controllable attributes of components of an imaging system. Initially, at least a part of the attributes of the system are put in a first state (270, 278 and 286). Following, at least a part of the attributes put in the first state are selected and have their state memorized and stored in a state marker 294 (272, 280 and 288). The attributes values of the components are then changed and put in a second state (274, 282 and 290). Finally, the system selects the marked state and instates the memorized state of the selected attributes (276, 284 and 292).

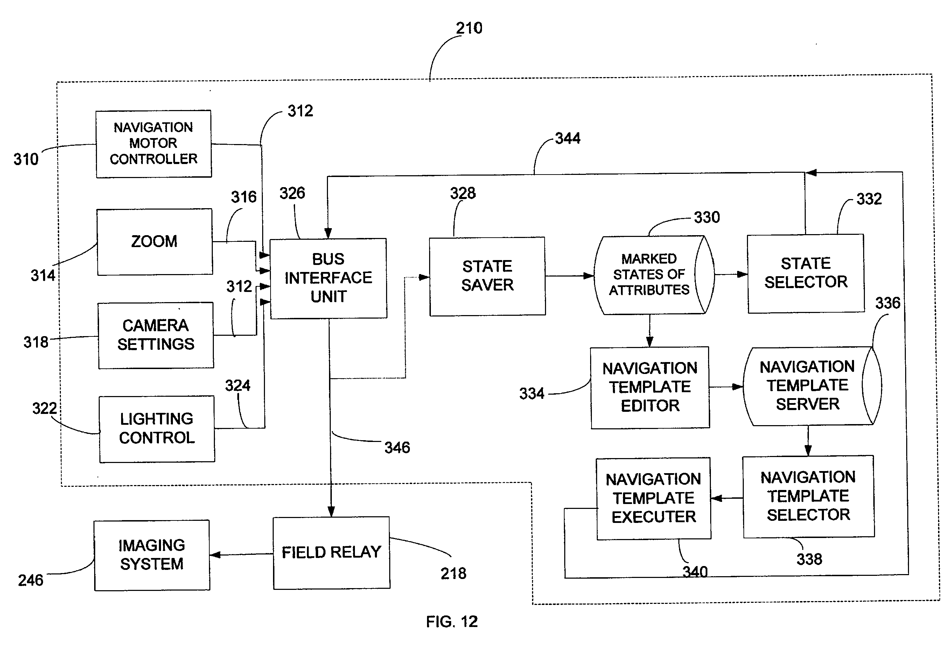

Referring to FIG. 12, there is shown a system for marking a state of controllable attributes of components of an imaging system. The system for marking a state of attributes is generally located in the workstation 210 and comprises a navigation motor controller 310, a zoom module 314, a camera setting module 318, a lighting controller 322, a bus interface unit 326, a state saver 328, a state marker 330, a state selector/executer 332. The workstation 210 (that generally comprises the system for marking a state of attributes) is connected to the imaging system 246 via the field relay 218.

The navigation motor controller 310 is a module that receives a motor control signal for controlling the motor and sends a motor attribute signal 312 containing motor attribute values to the bus interface unit 326. The motor control signal is generated by an appropriate user-friendly interface, such as a joystick, manipulated by the operator. The zoom module 314 is a module that receives a zoom control signal generated by the operator for controlling the zoom of the camera and sends a zoom attribute signal 316 containing zoom attribute values to the bus interface unit 326. Similarly, the camera setting module 318 receives a camera control signal generated by the operator for controlling the camera and sends a camera attribute signal 320 containing camera attribute values to the bus interface unit 326. Finally, the lighting controller 322 is a module that receives a light control signal generated by the operator for controlling the light projectors and sends a light attribute signal 324 containing light projectors attribute values to the bus interface unit 326. All of the navigation motor controller 310, the zoom module 314, the camera setting module 318 and the lighting controller 322 are preferably software modules.

The bus interface unit 326 conveys the received attribute signals (312, 316, 320 and 324) to the imaging system 246 via the field relay 218 in order to control the different components of the imaging system. The operator at the workstation 210 supervises, by the means of the display 220, the change of state of the attributes of the different components. If the operator decides to mark the state of the attributes, the bus interface 326 conveys the attribute signals to the state saver 328 to save the attribute values. Thereafter, the state saver 328 sends these attribute values for storage in the state marker 330. In the course of inspection, when the operator selects the marked state for execution, the state selector/executer 332 sends an attribute signal 344 with the memorized state of attributes to the bus interface 326 to be thereafter conveyed to the imaging system 246 to control the different components.

The number of types of materials used to construct underground sewers exceeds 25 different types (ex. sandstone, steel, PVC) and they are listed and used in all the countries of the world. In general, all sewage networks are built according to a same general principle according to which conduits of small diameters are located upstream of the basin of drainage and conduits of bigger diameters are located downstream, towards the more significant collectors. The diameters thus vary from 4 inches to more than 12 feet. A typical sewage network consists of a score of different diameters. Each material has a characteristic color (ex. white, black, blue, red, etc).

Since its beginnings in the middle of the Fifties, the industry of sewers inspection encounters a persistent difficulty to generate a film accurately reproducing the real conditions observed in the conduits. Several factors combine to make the spot difficult. One among other factors is that the type of the inspected conduit (i.e. mainly, the diameter of the conduit and it's type of material) influences on the reflection of the projected light and therefore impacts the quality of the recorded image. Consequently, in order to ensure a quality of image of the inspecting conduit, the attributes of the imaging system (ex. the iris, the gain, the contrast, the shutter speed, the back light compensation, etc.) should be adjusted as a function of the type of the inspecting conduit.

There is a big range of conduit types used in industry (i.e. approximately 500: 25 different material types x 20 different diameter dimensions). Adjusting manually attributes of the camera as a function of each conduit type encountered during inspection is therefore a huge time consuming and is practically impossible.

The norms of inspection being clearly defined by the municipal authorities, the actions constituting a standard inspection are clearly detailed and known. In this view, a standard inspection of an underground conduit is generally constituted of a series of repetitive actions, where each action is generally constituted of three phases: 1) positioning the camera in the center of the conduit and carrying out a rotating movement from 7 to 6 hours in order to inspect the crown of the pipe, 2) making a zoom-in and 3) making a zoom-out). The rotation angle of the camera and the intensity of the light projectors must be selected appropriately according to a type of the inspecting conduit (*i.e*. diameter dimensions and type of material).

The conduit inspection standardization makes it possible to automate conduit inspection systems. In this order, the system uses navigation templates especially adapted for various types of inspecting conduits. Each navigation template contains, for a given type of an inspecting conduit, at least one set of predefined attribute values of the components of the imaging system (*i.e*. attributes of the camera, attributes of the projectors, attributes of the motors, attributes of the zoom, etc). Navigation templates can have one set of attribute values but, generally, they contain a sequence in time of a group of sets of attribute values allowing the inspection system to operate in an automated mode for a given period of time. Also, navigation templates can, partially or totally, be made of one or a group of marked states.

Generally, a navigation template operates as follows: once the imaging system positioned in the center of the pipe, the operator selects the inspecting conduit type (*i.e*. the diameter and the type of material) and the system automatically selects and executes a suitable navigation template as a function of the selected inspecting conduit. Thereafter, all the attributes of the components of the imaging system are adjusted automatically. If the given navigation template contains a sequence in time of a group of attribute values, the imaging system will then navigate in an automated mode for a given period of time. The operator visualizes the course of the operation by the means of the display 220 or the workstation 210.

It is possible to conceive a navigation template that, when executed, activates attributes of only a part of components of an imaging system. This makes it possible to automate only a part of the components of the imaging system (for instance, automating the zoom) and to preserve a manual mode for the other part of the components (for instance, preserving a manual operability to vary the intensity of the projectors and the orientation of the camera). A navigation template can also be interrupted in court of execution while preserving a marker (state marker) memorizing the attribute values of the components of the imaging system right before the interruption. The system also allows the creation of new navigation templates for new types of conduits not envisaged originally by the system.

Thanks to navigation templates, the inspection of conduits becomes much less time consuming because the need for repetitive manual adjustments is minimized. The productivity is therefore increased.

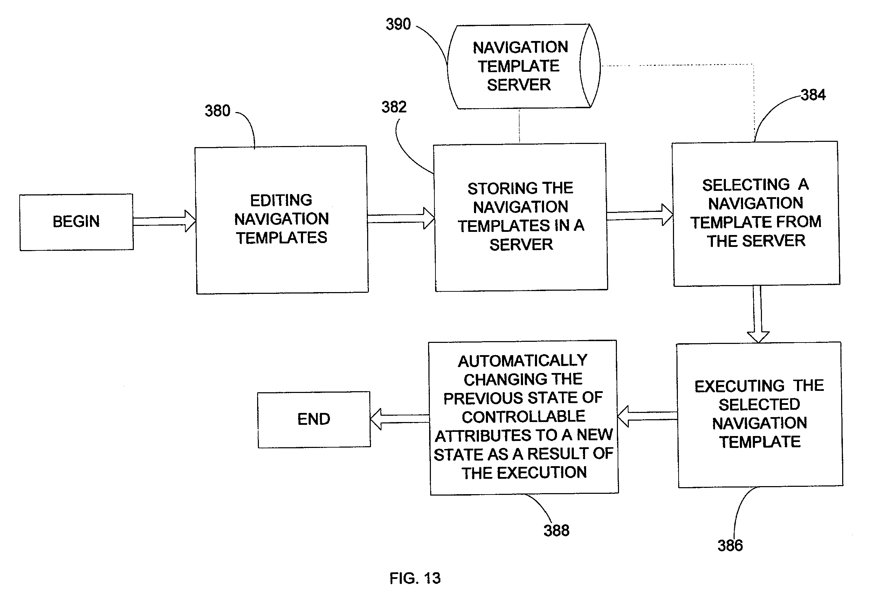

Referring to FIG. 13, there is shown a method of inspection of an underground conduit using a navigation template. Generally, navigation templates are edited 380 and stored 382 in a navigation template server 390 before starting the inspection. Even if navigation templates are usually edited as a function of types of inspecting conduits and stored prior to the inspection, it is always possible to edit navigation templates in the course of inspection, for instance, by marking and memorizing a given state of attributes. Following the edition 380 and the storage 382 steps, the operator selects a given navigation template (among a group of navigation templates) 384 from the navigation template server (that can be the same physical device as the workstation) 390 to be eventually executed 386. Generally, the selection of the navigation template is carried out as a function of the type of the inspecting conduit. Upon execution of the selected navigation template, the attribute values contained in the selected navigation template are sent to the imaging system to automatically navigate the imaging system according the selected navigation template 388. In other words, the system changes the previous state of attributes of the components of the imaging system to a new one according to content of the executed navigation template 388.

Referring to FIG. 12, there is shown a system for inspecting an underground conduit using a navigation template. The system comprises a navigation template editor 334, a navigation template server 336, a navigation template selector 338 and a navigation template executer 340. Normally, all these components are located within the workstation 210. The navigation template editor 334 allows editing new navigation templates and is connected to the navigation template server 336 to store the edited navigation templates. According to one aspect of the invention, the navigation template editor 334 is also connected to the state maker 330 to receive a marked state when required. In fact, the edited navigation templates are usually edited manually and stored prior to the inspection, but it is also possible to edit navigation templates from the marked states of attributes. The navigation template selector 338 allows selecting a given navigation template according to a choice of the operator and it is connected to the navigation template server 336 to select and receive the given navigation template among a group of stored navigation templates. The navigation template executer 340 is responsible for executing the selected navigation template and sending this selected navigation template to the imaging system 246. Therefore, the navigation template executer 340 is connected to the navigation template selector 338 to receive and execute the selected navigation template. The navigation template executer 340 is also connected to the bus interface unit 326 to send to the imaging system an attribute signal 344 containing the selected navigation template 246 for automatically navigating the imaging system 246 according to the selected navigation template.

After inspection, the video generated in connection with a given inspected conduit should be clearly identified. To be able to associate correctly an inspection video file with its corresponding inspected underground conduit, the video file is labeled as a function of the names of the conduit and of the inspection project. Also, the system allows inserting, at the beginning of the introduction video, an introduction video containing identification information about the inspected conduit to clearly identify the latter. Identification information comprises the number, the geographic localization and the type (i.e. material type and dimensions) of the conduit.

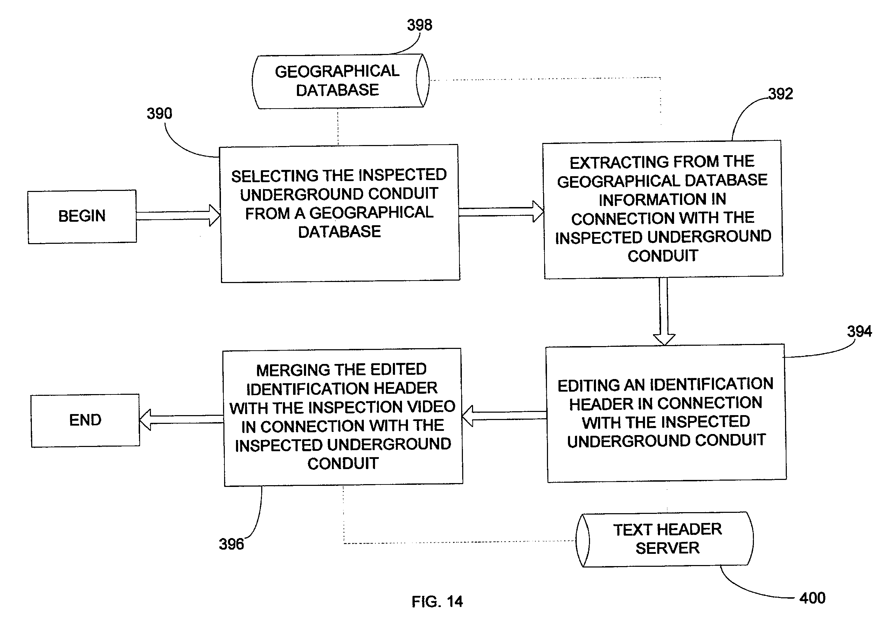

Entering the identification information manually is subject to human errors, where the need to enter the information automatically, without human intervention. Referring to FIG. 14, there is shown a method of creating an identification header using a database to automatically extract information in connection with an inspected underground conduit. The operator starts by selecting, from a database 398 (*i.e*. geographical or relational database), the inspected underground conduit 390. Thereafter, the system extracts, from the database 398, information in connection with the inspected underground conduit 392. Such information comprises the number, the localization and the type of the inspected underground conduit. Following, the system automatically edits a text identification header in connection with the inspected underground conduit 394 and stores the text header in a text header server 400. Finally, the system merges the edited identification header with the inspection video in connection with the inspected underground conduit 396. This method being free of any human intervention, editing errors (that usually occur when information is entered manually) are eliminated. Moreover, this automated method is faster and more reliable than any other manual method used for creating identification headers in connection with conduits. When the edited information header contains too much information to fit within a sole page, the system spreads automatically the identification information over as many consecutive pages as necessary.

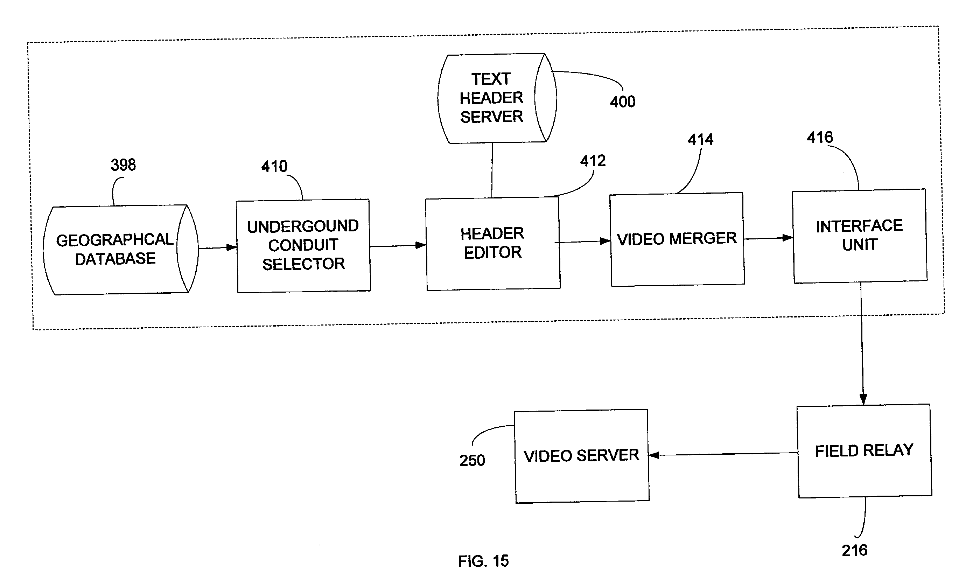

Referring to FIG. 15, there is shown a system for creating an identification header using a database to automatically extract information in connection with an inspected underground conduit. The system comprises a database 398 (*i.e*. geographical or relational database), an underground conduit selector 410, a header editor 412, a text header server 400, a video merger 414 and an interface unit 416. The underground conduit selector 410 is connected to the database 398 to select the inspected conduit among a group of conduits and to extract information in connection with the selected underground conduit. The Header editor 412 is connected to the underground conduit selector 410 to receive information about the selected underground conduit. Thereafter, the header editor proceeds to edit an identification header according to the received information and stores the edited identification header in the text header server 400. When activating the header edition process, the operator can choose editing options, such as characters' style, size and color. The video merger 414 is connected to the header editor 412 to receive the edited header. The video merger 414 merges the received identification header with the inspection video in connection with the inspected conduit and sends the resulting video to the interface unit 416 that conveys it to the video server 250 via the field relay 216. When the database 398 is updated with new information about the inspected underground conduit, the header editor 312 provides the possibility to automatically update the associated identification header as well as the associated inspection video to take into account the new information. An update operation in connection with a given identification header can be repeated as many times as necessary without any risk of deteriorating the quality of the inspection video.

The light projectors of the imaging system are preferably electronically controllable light projectors, such that the operator can control their intensities remotely. The system provides a camera with a high magnification zoom surrounded by at least 5 projectors to provide necessary lighting in the inspecting conduit. The reason to place the light projectors all over the circumference surrounding the camera is to be able to provide uniform lighting for all the circumference of the conduit without creating shadow zones in the bottom side of the camera. The light projectors should have an appropriate size such that the circumference on which they stand does not exceed 8 inches to be able to insert the imaging system in narrow places. The camera and the light projectors are preferably contained inside a hexagonal housing with a common faceplate for both the camera and the light projectors. The housing preferably comprises cooling fins and at least one thermoelectric cooling device (ex. Peltier device) to dissipate heat generated by the light projectors. The camera and the light projectors are arranged in such a way that the camera is centered inside the housing and the light projectors surround the camera.

Moreover, the housing comprises apertures of standard dimensions that can receive standard 58 millimeter lens filters and inside of which the light projectors are located, such that light projected by the light projectors is filtered by effect of the standard lens filters in order to improve quality of imaging. The filters are generally chosen as a function of the imaging environment. When the latter is a wall of an underground conduit, the optical filters are generally chosen as a function of material of the wall and the humidity rate inside the underground conduit, such that the acquired image shows clearly defects on the wall. When the inspecting conduit is filled with liquid, selection of the optical filters is carried out in considering reflection characteristics of the liquid, such that the acquired image is free of light projected by the liquid.

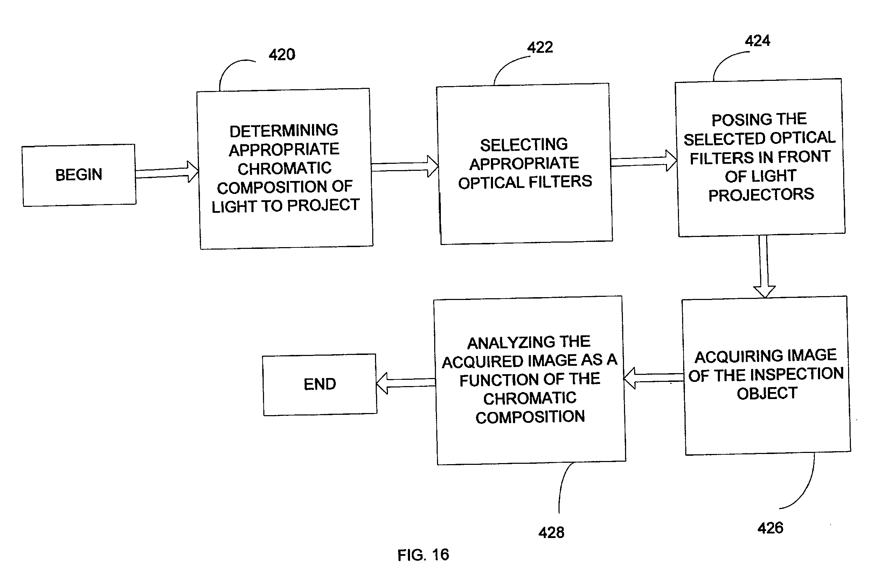

Referring to FIG. 16, there is shown a method of inspecting a conduit using optical filters. First, the operator determines an appropriate chromatic composition of light to project as a function of imaging environment 420. Second, the operator selects appropriate optical filters as a function of the appropriate chromatic composition of light to project 422. Third, the operator poses the selected optical filters in front of light projectors of the inspection system, such that light projected by the light projectors on the inspection object is filtered by effect of the posed optical filters 424. Fifth, the system acquires the image of said inspection object 426. Finally, said acquired image is being analyzed as a function of the chromatic composition of the projected light 428.

The present invention has been described with regards to preferred embodiments. In will be obvious to one skilled in the art that several modifications or variations may be brought to the invention without departing from the scope of the invention as described herein and are intended to be covered by the present description.

As has been claimed in the parent application as filed, there are several aspects of the invention.

A first aspect is an apparatus for conducting remote subsurface inspections from above, comprising:
a support structure adapted to be positioned above a working surface, said support structure having an articulating radial arm, said articulating radial arm having a pivot at one end and a coupling at the other end, said pivot having a rotation axis substantially normal to said working surface;
a mast held by said coupling and born generally upright in use by said support structure, said mast having a portion that is downwardly extendable below the working surface and that has a mounting thereon;
an imaging system held by said mounting on said extending portion of said mast; and
an offsetting mechanism operative to displace said imaging system laterally from a vertical reference axis beneath said coupling when said extending portion of said mast has been extended below the working surface.

Preferable but non limitative aspects of the apparatus according to the first aspect are the following:
- said coupling comprises a mast pivot having a mast rotation axis substantially perpendicular to the extension axis of said mast, said mast pivot being maneuverable to allow rotation of said mast with respect to said support structure around said mast rotation axis.
- said mounting comprises an adjustable interconnection between said imaging system and said extending portion of said mast, said interconnection being remotely maneuverable from a first position in which said imaging system is proximal to said extending portion of said mast, to a second position in which said imaging system is displaced from said extending portion of said mast.
- said articulating radial arm comprises a plurality of sections joined by swivels.
- said swivels and said mast pivot have locking mechanism to prevent their free rotation.
- said support structure further comprises a retractable ground contacting leg to aid in stabilizing said mast when said apparatus is in use.
- the apparatus further comprises a display to display images from said imaging system.
- said display is mounted on a portion of said mast that is not downwardly extendable below the working surface.
- the apparatus further comprises an actuating mechanism operative to extend and retract said extending portion of said mast.
- said support structure comprises an adaptor section adapted to fit to a hitch installed on a vehicle.
- said mast comprises telescoping cylindrical sections.
- said imaging system comprises a video camera.
- said imaging system further comprises at least one light.
- said imaging system further comprises a plurality of lights arranged around said video camera.
- said video camera comprises a zoom lens of at least 20 times magnification.

A second aspect is a method for conducting remote subsurface inspections from above, comprising the steps of:
(a) locating an access point on a working surface above a subsurface area;
(b) positioning an apparatus as recited in claim 1 proximal to said access point;
(c) manipulating the mast of said apparatus in vertical alignment with said access point;
(d) lowering the extending portion of said mast downwardly into such subsurface area until the imaging system of said apparatus is at the level to be inspected; and
(e) reviewing images of such subsurface area from said imaging system.

Preferable but non limitative aspects of the method according to the second aspect are the following:
- the method further comprises the step of displacing said imaging system laterally from a vertical reference axis beneath the coupling of the support structure of said apparatus when said extending portion of said mast has been extended below the working surface.
- said coupling comprises a mast pivot, and wherein said step of displacing said imaging system laterally comprises maneuvering said mast pivot to rotate said mast with respect to said support structure.
- the mounting of said extending portion of said mast comprises an adjustable interconnection between said imaging system and said extending portion of said mast, and wherein said step of displacing said imaging system laterally comprises remotely maneuvering said adjustable interconnection from a first position in which said imaging system is proximal to said extending portion of said mast, to a second position in which said imaging system is displaced from said extending portion of said mast.

A third aspect is an apparatus for conducting remote subsurface inspections from above, comprising:
a support structure having an articulated radial arm and a coupling, said articulated radial arm being connected to said coupling, said support structure being adapted to be positioned above a working surface;
a mast held by said coupling and born generally upright in use by said support structure, said mast having an extending portion that is downwardly extendable below the working surface and that has a mounting thereon; and
an imaging system held by said mounting on said extending portion of said mast.

Preferable but non limitative aspects of the apparatus according to the third aspect are the following:
- the apparatus further comprises an offsetting mechanism operative to displace said imaging system laterally from a vertical reference axis beneath said coupling when said extending portion of said mast has been extended below the working surface.
- said coupling comprises a mast pivot having a mast rotation axis substantially perpendicular to the extension axis of said mast, said mast pivot being maneuverable to allow rotation of said mast with respect to said support structure around said mast rotation axis.
- said mounting comprises an adjustable interconnection between said imaging system and said extending portion of said mast, said interconnection being remotely maneuverable from a first position in which said imaging system is proximal to said extending portion of said mast, to a second position in which said imaging system is displaced from said extending portion of said mast.
- said articulating radial arm comprises a plurality of sections joined by swivels.
- said support structure further comprises a retractable ground contacting leg to aid in stabilizing said mast when said apparatus is in use.
- said support structure comprises an adaptor section adapted to fit to a hitch installed on a vehicle.
- said mast comprises telescoping cylindrical sections.
- said imaging system comprises a video camera.

A fourth aspect is an apparatus for conducting remote subsurface inspections from above, comprising:
a support structure having a coupling, and having a fitting to secure said apparatus to a hitch receiver installed on a vehicle, positioned above a working surface;
a mast held by said coupling and born by said support structure, said mast having an extending portion that is downwardly extendable below the working surface and that has a mounting thereon; and
an imaging system held by said mounting on said extending portion of said mast.

Preferable but non limitative aspects of the apparatus according to the fourth aspect are the following:
- the apparatus further comprises at least one hitch receiver installed on a vehicle, wherein said fitting comprises a bar adapted to be removably held within said hitch receiver such that said support structure is oriented to bear said mast generally upright in use.
- said support structure further comprises an articulating radial arm connecting said mast thereto.
- said at least one hitch receiver is a standard trailer hitch receiver.
- the apparatus further comprises a plurality of hitch receivers installed on a vehicle.
- at least one of said hitch receivers is installed at the side of said vehicle.
- the apparatus further comprises an offsetting mechanism operative to displace said imaging system laterally from a vertical reference axis beneath said coupling when said extending portion of said mast has been extended below the working surface.
- said coupling comprises a mast pivot having a mast rotation axis substantially perpendicular to the extension axis of said mast, said mast pivot being maneuverable to allow rotation of said mast with respect to said support member around said mast rotation axis.
- said mounting comprises an adjustable interconnection between said imaging system and said extending portion of said mast, said interconnection being remotely maneuverable from a first position in which said imaging system is proximal to said extending portion of said mast, to a second position in which said imaging system is displaced from said extending portion of said mast.
- said articulating radial arm comprises a plurality of sections joined by swivels.
- said swivels and said mast pivot have locking mechanism to prevent their free rotation.
- said support structure further comprises a retractable ground contacting leg to aid in stabilizing said mast when said apparatus is in use.
- the apparatus further comprises a display to display images from said imaging system.
- said display is mounted on a portion of said mast that is not downwardly extendable below the working surface.
- the apparatus further comprises an actuating mechanism operative to extend and retract said extending portion of said mast.
- said mast comprises telescoping cylindrical sections.
- said imaging system comprises a video camera.
- said imaging system further comprises a plurality of lights arranged around said video camera.
- said video camera comprises a zoom lens of at least 20 times magnification.

A fifth aspect is a method for conducting remote subsurface inspections from above, comprising the steps of:
(a) locating an access point on a working surface above a subsurface area;
(b) positioning an apparatus as recited in claim 29 proximal to said access point;
(c) manipulating the mast of said apparatus in vertical alignment with said access point;
(d) lowering the extending portion of said mast downwardly into such subsurface area until the imaging system of said apparatus is at the level to be inspected; and
(e) reviewing images of such subsurface area from said imaging system.

A sixth aspect is a method for conducting remote subsurface inspections from above, comprising the steps of:
(f) locating an access point on a working surface above a subsurface area;
(g) positioning an apparatus as recited in claim 35 proximal to said access point;
(h) manipulating the mast of said apparatus in vertical alignment with said access point;
(i) lowering the extending portion of said mast downwardly into such subsurface area until the imaging system of said apparatus is at the level to be inspected; and
(j) reviewing images of such subsurface area from said imaging system.

Preferable but non limitative aspects of the method according to the sixth aspect are the following:
- the method further comprises the step of displacing said imaging system laterally from a vertical reference axis beneath the coupling of the support structure of said apparatus when said extending portion of said mast has been extended below the working surface.
- said coupling comprises a mast pivot, and wherein said step of displacing said imaging system laterally comprises maneuvering said mast pivot to rotate said mast with respect to said support structure.
- the mounting of said extending portion of said mast comprises an adjustable interconnection between said imaging system and said extending portion of said mast, and wherein said step of displacing said imaging system laterally comprises remotely maneuvering said adjustable interconnection from a first position in which said imaging system is proximal to said extending portion of said mast, to a second position in which said imaging system is displaced from said extending portion of said mast.

A seventh aspect is a vehicle hitch mounting structure having a first and a second receivers and corresponding first and second longitudinal planes and first and second transversal planes, wherein said first longitudinal plane is parallel to said second longitudinal plane and said first transversal plane is substantially perpendicular to said second transversal plane and wherein said first receiver and second receiver are of the same type.

Preferable but non limitative aspects of the vehicle according to the seventh aspect are the following:
- the vehicle further comprises a third receiver placed co-linearly with said second receiver and facing a direction which is opposite to the direction faced by said second receiver.
- said first, second and third receivers are standard trailer hitch receivers.
- the vehicle further comprises a vehicle body.
- the vehicle further comprises the apparatus according to the fourth aspect.

An eighth aspect is an inspection system comprising:
a mast;
a support member to support said mast;
a camera with a first interface unit to control attributes of said camera, said camera being mounted on said mast;
a controllable high magnification ratio zoom with a zoom controller to control said high magnification ratio zoom, said zoom being mounted on said mast;
electronically controllable light projectors with a second interface unit to control attributes of said light projectors, said light projectors being mounted on said mast;
motors with a motor controller to mechanically control orientation of said camera, said zoom and said light projectors with respect to said mast; and
a third interface unit located in proximity of said camera, said light projectors and said motors, said third interface unit having a single input signal and output signals connecting said third interface unit to each of said camera, said zoom controller, said light projectors and said motor controller.

A preferable but non limitative aspect of the inspection system according to the eighth aspect is that it further comprises a power supply converter located in proximity of said light projectors, said power supply converter receiving a 48 volts current via a 48 volts cable connected to a remote power supply unit and converting said 48 volts to a 12 volts current in order to supply said light projectors.

A ninth aspect is an inspection system comprising:
a mast;
a support member to support said mast;
a camera having an output video signal, said camera being mounted on said mast;
a server connected to said camera to store at least a part of said video signal outputted by said camera; and
a workstation connected to said server to control said video server to record said video signal and to transmit said recorded video signal to said workstation.

Preferable but non limitative aspects of the inspection system according to the ninth aspect are the following:
- said camera is an analog camera having a controllable zoom, controllable orientation and controllable lighting for illuminating and imaging said conduit, said output video signal is an output analog video signal and said server is part of a field relay unit providing power to said camera, said lighting and positioning motors, said field relay unit being connected to said camera to provide control signals and receive said output analog video signal from said camera and to said workstation via a data bus, said server further comprising:
   ○ a CODEC device receiving said output analog video signal and converting said output analog video signal into a digital video signal and compressing said digital video signal for storage; and
   ○ a monitor image generator for sending a live monitor image from said camera to said workstation over said data bus.
- the inspection system further comprises motors mounted on said mast to mechanically control orientation of said camera with respect to said mast.

A tenth aspect is a method of automatically generating attribute values defining controllable attribute values of an inspection imaging system, said method comprising steps of:
manually setting each of said attribute values to put the inspection system in an initial state;
selecting a navigation template among stored navigation templates, where said navigation template contains at least one set of said attribute values defining controllable attribute values of an inspection imaging system;
executing said navigation template during inspection of said inspecting object to generate said at least one set of said attribute values, said attribute values including camera orientation, camera zoom and lighting intensity; and
sending said at least one set of said attribute values to said inspection imaging system to automatically navigate according to said selected navigation template.

Preferable but non limitative aspects of the method according to the tenth aspect are the following:
- said at least one set of said attribute values comprises a sequence in time of a group of sets of said attribute values.
- said navigation template represents a marked state of attributes, and sending said at least one set of attribute values comprises sending one set of attribute values defined by said marked state.
- said step of selecting a navigation template comprises selecting said navigation template as a function of a type of said inspecting object.

An eleventh aspect is a system for automatically generating attribute values defining controllable attribute values of an inspection imaging system, said system comprising:
a user interface unit receiving user friendly data commands from an end user to define said controllable attribute values;
a motor control module connected to said user interface unit to acquire a first user friendly data command and outputting a first attribute signal to control position and orientation of said inspection imaging system;
a zoom module connected to said user interface unit to acquire a second user friendly data command and outputting a second attribute signal to control a high magnification ratio zoom of a camera of said inspection imaging system;
a camera module connected to said user interface unit to acquire a third user friendly data command and outputting a third attribute signal to control attributes of said camera;
a light projector module connected to said user interface unit to acquire a fourth user friendly data command and outputting a fourth attribute signal to control attributes of electronically controllable light projectors of said inspection imaging system; and
an interface unit receiving said attribute signals and outputting corresponding imaging system control signals;
a storage unit storing navigation templates, where each of said navigation templates contains at least one set of said attribute values defining said controllable attribute values of said inspection imaging system;
a select module connected to said storage unit to select a navigation template among said navigation templates in said storage unit; and
an execute module connected to said select module to execute said desired navigation template and to output said desired navigation template to said imaging system via said interface unit.

A preferable but non limitative aspect of the system according to the eleventh aspect is that it further comprises a state save module connected to said storage unit for storing, as a navigation template, said attribute signals corresponding to a current state.

A twelfth aspect is a method of creating an identification header using a database to automatically extract information in connection with an inspecting object, the method comprising steps of:
navigating an inspection imaging system mounted on a mast supported by a support member to inspect said inspecting object;
recording said inspection to create an inspection video in connection with said inspecting object;
selecting said inspecting object in a database containing information about said inspecting object;
extracting, from said database, said information about said inspecting object;
using said extracted information for automatically editing a text identification header in connection with said inspecting object; and
merging said text identification header with said inspection video in connection with said inspection object.

A thirteenth aspect is a system for creating an identification header using a database to automatically extract information in connection with an inspecting object, the system comprising:
an inspection imaging system mounted on a mast supported by a support member to inspect said inspecting object;
a storage unit containing information about a given group of inspecting objects;
a select module connected to said storage unit to select said inspecting object among said given group of inspecting objects in said storage unit;
a header edit module connected to said select module to edit an identification header in connection with said inspecting object; and
a video merge module connected to said header edit module to merge said edited identification header with an inspection video in connection with said inspecting object.

A fourteenth aspect is an inspection imaging system mounted on a mast supported by a support member, said imaging system comprising:
a camera with an electronically controllable high magnification ratio zoom to perform inspections both from close up and from a distance;
at least five light projectors to provide necessary lighting in said underground conduit; and
a housing containing said camera and said light projectors, said camera being centered in said housing and said light projectors surrounding said camera.

Preferable but non limitative aspects of the system according to the fourteenth aspect are the following:
- said housing has a common faceplate for both said camera and said light projectors.
- said housing has a hexagonal shape.
- said housing comprises cooling fins and at least one thermoelectric cooling device to dissipate heat generated by said light projectors.
- the imaging system as further comprises a mast to support components of said imaging system and motors to mechanically control orientation of said imaging system with respect to said mast.
- said housing comprises apertures of standard dimensions that can receive standard 58 millimeter lens filters and inside of which said light projectors are located, such that light projected by said light projectors is filtered by effect of said standard lens filters.

A fifteenth aspect is a method of inspecting an inspection object using optical filters, the method comprising steps of:
determining appropriate optical composition of light to project as a function of an imaging environment;
selecting appropriate optical filters as a function of said appropriate optical composition of light to project;
placing said selected optical filters in front of light projectors of said inspection system, such that light projected by said light projectors on said inspection object is filtered by effect of said placed optical filters;
acquiring an image of said inspection object; and
analyzing said acquired image as a function of said optical composition of said projected light.

Preferable but non limitative aspects of the method according to the fifteenth aspect are the following:
- said imaging environment is a wall of an underground conduit and said selection of appropriate optical filters is carried out as a function of at least one of humidity inside said underground conduit and material of said wall such that said acquired image shows defects of said wall.
- said imaging environment is an underground conduit filled with liquid and said selection of appropriate optical filters is carried out as a function of at least one of humidity inside said underground conduit and reflection properties of said liquid such that said acquired image is free of light projected by said liquid.

## Claims

1. An apparatus for conducting remote subsurface inspections from above, comprising:
a support structure adapted to be positioned above a working surface, said support structure having an articulating radial arm, said articulating radial arm having a pivot at one end and a coupling at the other end, said pivot having a rotation axis substantially normal to said working surface;
a mast held by said coupling and born generally upright in use by said support structure, said mast having a portion that is downwardly extendable below the working surface and that has a mounting thereon;
an imaging system held by said mounting on said extending portion of said mast;
said apparatus being **characterized in that** it further comprises an offsetting mechanism operative to displace said imaging system laterally from a vertical reference axis beneath said coupling when said extending portion of said mast has been extended below the working surface.

2. An apparatus as defined in claim 1 wherein said coupling comprises a mast pivot having a mast rotation axis substantially perpendicular to an extension axis of said mast, said mast pivot being maneuverable to allow rotation of said mast with respect to said support structure around said mast rotation axis.

3. An apparatus as defined in claim 1 wherein said mounting comprises an adjustable interconnection between said imaging system and said extending portion of said mast, said interconnection being remotely maneuverable from a first position in which said imaging system is proximal to said extending portion of said mast, to a second position in which said imaging system is displaced from said extending portion of said mast.

4. An inspection imaging system mounted on a mast supported by a support member, said imaging system being **characterized by**:
a camera with an electronically controllable high magnification ratio zoom to perform inspections both from close up and from a distance;
at least five light projectors to provide necessary lighting in said underground conduit; and
a housing containing said camera and said light projectors, said camera being centered in said housing and said light projectors surrounding said camera.

5. An inspection system comprising:
a mast;
a support member to support said mast;
a camera with a first interface unit to control attributes of said camera, said camera being mounted on said mast;
a controllable high magnification ratio zoom with a zoom controller to control said high magnification ratio zoom, said zoom being mounted on said mast;
electronically controllable light projectors with a second interface unit to control attributes of said light projectors, said light projectors being mounted on said mast;
motors with a motor controller to mechanically control orientation of said camera, said zoom and said light projectors with respect to said mast;
said inspection system being **characterized by** a third interface unit located in proximity of said camera, said light projectors and said motors, said third interface unit having a single input signal and
output signals connecting said third interface unit to each of said camera, said zoom controller, said light projectors and said motor controller.

6. An inspection system comprising:
a mast;
a support member to support said mast;
a camera having an output video signal, said camera being mounted on said mast;
said inspection system being **characterized by**:
a server connected to said camera to store at least a part of said video signal outputted by said camera; and
a workstation connected to said server to control said video server to record said video signal and to transmit said recorded video signal to said workstation.

7. An inspection system as claimed in claim 6, wherein said camera is an analog camera having a controllable zoom, controllable orientation and controllable lighting for illuminating and imaging said conduit, said output video signal is an output analog video signal and said server is part of a field relay unit providing power to said camera, said lighting and positioning motors, said field relay unit being connected to said camera to provide control signals and receive said output analog video signal from said camera and to said workstation via a data bus, said server further comprising:
a CODEC device receiving said output analog video signal and converting said output analog video signal into a digital video signal and compressing said digital video signal for storage; and
a monitor image generator for sending a live monitor image from said camera to said workstation over said data bus.
